# EUROPEAN PATENT SPECIFICATION

(11) **EP 3 502 740 B1**
(45) Date of publication and mention of the grant of the patent: **28.10.2020**
(21) Application number: 17209521.8
(22) Date of filing: 21.12.2017
(51) Int. Cl.: G01S 13/931, G01S 7/40

(54) **RADAR CALIBRATION IN A NEAR-STATIC ENVIRONMENT**
RADARKALIBRIERUNG IN EINER BEINAHE STATISCHEN UMGEBUNG
ÉTALONNAGE DE RADAR DANS UN ENVIRONNEMENT QUASI STATIQUE

(43) Date of publication of application: 26.06.2019
(73) Proprietor: Veoneer Sweden AB, 447 83 Vårgårda (SE)
(72) Inventor: Henftling, Hermann, 97320 Mainstockheim (DE); Klotzbuecher, Dirk, 97320 Mainstockheim (DE); Poiger, Walter, 97616 Bad Neustadt (DE); Schmied, Julian, 97421 Schweinfurt (DE)
(74) Representative: Sandstedt, Jonas Sven James

(56) References cited:
- DE-A1- 19 503 818
- US-A- 5 486 830

## Description

The present disclosure relates to methods and devices for calibrating a radar sensor system, such as a radar sensor system for use in vehicular applications.

Today, vehicle environment sensor systems, such as camera systems, radio detection and ranging (radar) systems and light detection and ranging (lidar) systems, can be mounted on a vehicle, often referred to as an ego vehicle, to detect and to track objects in a vicinity of the vehicle. The input from these sensor systems can be used to automate vehicle systems such as speed control and collision prevention. Auto alignment, ego motion estimation, scene understanding, lane keeping assist (LKA) and automated driving (AD) are also enabled by using the sensor system output signals.

Radar systems are sensor systems arranged to produce output comprising a series of reflection points as measured by radar receiver sensors.

Radar sensors used to estimate bearings and ranges to target objects are affected by various vehicle components such as different types of bumpers and vehicle front and rear section geometries. Sensors are also affected by variations during manufacturing and assembly. Radar sensor systems therefore require calibration to produce accurate sensor output signals. This calibration is often performed in factory, which is time-consuming and drives cost.

Radar calibration methods using anechoic chambers are known. However, anechoic chambers are costly and difficult to relocate.

Radar calibration methods using Doppler modulating target transponders are also known. However, such transponders are costly to implement due to strict phase and amplitude linearity requirements.

DE 195 03 818 discloses a system for communication between a fixed device and a moving device. The uplink communication between the moving device and the fixed device is based on a transponder mechanism. The beacon transmits a carrier signal which the moving device modulates and transmits back towards the fixed device. The modulation is by means of frequency shift keying (FSK) or phase shift keying (PSK).

US 5 486 830 discloses a transponder that communicates with an illuminating device by means of phase-shifts of the retransmitted illuminating signal. The transponder further applies amplitude gating and phase coding to the re-transmission, which is later used to enhance the received signal by a form of correlator processing.

US 8,775,064 B2 discloses methods and tools for virtually aligning object detection sensors on a vehicle.

There is a need for enhanced methods to calibrate radar sensor systems.

It is an object of the present disclosure to provide such improved methods and devices for sensor calibration.

This object is achieved by a method for calibrating a radar transceiver. The method comprises configuring a target object with a modulating transceiver associated with a first modulation, configuring the radar transceiver with a modulator associated with a second modulation configured to invert the first modulation and having a zero mean value, integrating an output signal of the modulator to generate an integrated received radar signal corresponding to a radar detection of the target object, and determining a calibration parameter of the radar transceiver based on the integrated received radar signal.

The method is especially suited for calibration in a near-static environment, i.e., an environment where objects are stationary, or almost stationary.

Hereby, an interference source not configured with the first modulation is suppressed due to the integrating of a zero-mean modulated signal. Consequently, determining of a calibration parameter can be performed in presence of interference, since this interference is suppressed. This means that an anechoic chamber is not necessary in order to determine the calibration parameter. This saves space, and allows for a calibration system which can be easily re-located. There is also no need for the costly absorption material and infrastructure used in anechoic chambers.

According to some aspects, the first and second modulations are M-ary phase shift keying, M-PSK, modulations, or M-ary quadrature amplitude modulations, M-QAM.

According to some such aspects, the first and second modulations are binary phase shift keying, BPSK, modulations.

These modulations are of low complexity and allows for a cost-efficient implementation. Thus, the need for costly Doppler modulating target transponders associated with strict phase and amplitude linearity requirements is avoided.

The object is also achieved by a target object for calibrating a radar transceiver. The target object comprises a modulating transceiver associated with a first modulation. The modulating transceiver is arranged to receive radar signals, and to modulate the received radar signals by the first modulation, and to re-transmit the modulated radar signals. Notably, the first modulation corresponds to an inverse of a second modulation of the radar transceiver.

The object is furthermore achieved by a radar transceiver configured for calibration in a near-static environment. The radar transceiver comprises a radar front end arranged to transmit radar signals and to receive reflected radar signals, an analog to digital converter, ADC, arranged to convert analog received radar signals into digital received radar signals, a modulator associated with a second modulation configured to invert a first modulation and to have a zero mean value. The modulator is arranged to modulate an output of the ADC of the radar transceiver, thereby compensating for the first modulation, and to input the modulated ADC output to a signal processing device comprised in the radar transceiver. The signal processing device is arranged to integrate the modulated ADC output to generate an integrated received radar signal corresponding to a radar detection of the target object, and to determine a calibration parameter of the radar transceiver based on the integrated received radar signal.

The target object and the radar transceiver are both associated with the advantages discussed in connection to the methods.

### BRIEF DESCRIPTION OF THE DRAWINGS

The present disclosure will now be described more in detail with reference to the appended drawings, where:
Figure 1 shows a schematic top view of a vehicle;
Figure 2 shows a simplified schematic of a radar system;
Figure 3 is a flowchart illustrating methods according to the present disclosure;
Figure 4A shows an example BPSK phase-modulated signal;
Figure 4B illustrates example modulation constellations;
Figure 4C shows example BPSK phase-modulated signals;
Figure 5 schematically illustrates components of a signal processing device.
Figure 6 schematically illustrates components of radar calibration system;
Figure 7 illustrates an example radar calibration system;
Figure 8 illustrates an example target object;

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

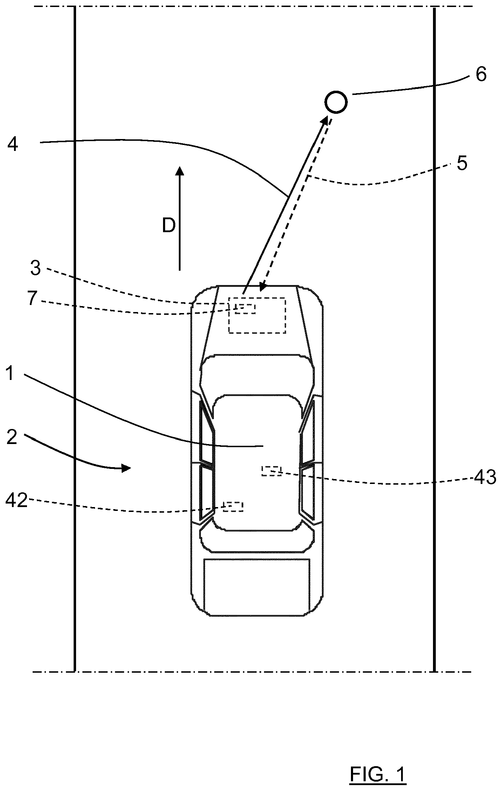

Figure 1 schematically shows a top view of a vehicle 1 arranged to travel on a road 2 in a direction D. The vehicle 1 comprises a vehicle radar system 3 which is arranged to distinguish and/or resolve targets from the surroundings by transmitting radar signals 4 and receiving reflected radar signals 5, and using a Doppler effect in a previously well-known manner.

The vehicle radar system 3 comprises a radar transceiver arrangement 7 and is arranged to provide, e.g., azimuth angle and radial velocity of possible target objects 6 by simultaneously sampling and analyzing phase and amplitude of the received signals 5. The distance to said target object 6 is according to some aspects also acquired. The radar transceiver 7 may be adapted for any suitable type of radar signal, such as FMCW (Frequency Modulated Continuous Wave) radar signals operating at about 77 GHz. There may be any number of radar transceivers 7 in the vehicle radar system 3, and they may be arranged for transmission in any suitable direction.

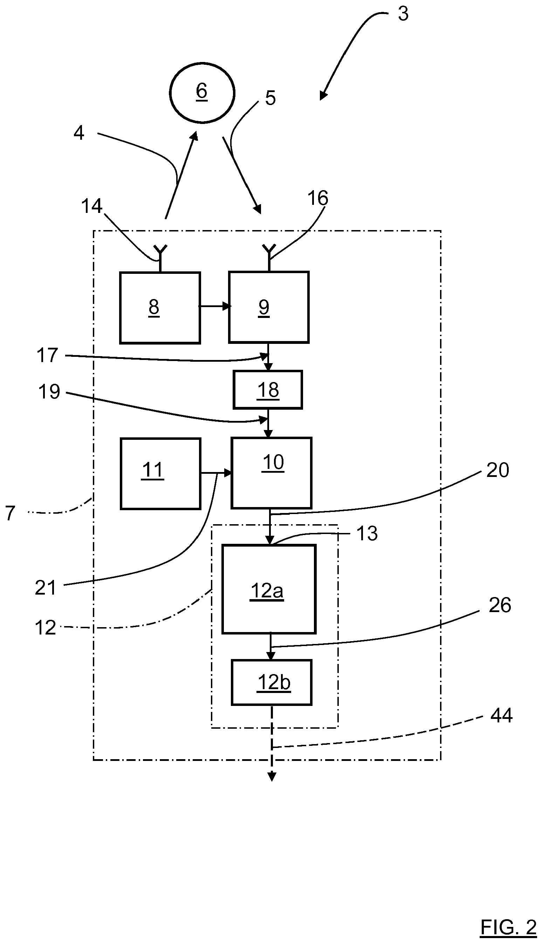

With reference also to Figure 2, the vehicle radar system 3 comprises a transceiver arrangement 7 that is arranged for generating and transmitting radar signals 4, e.g., in the form of FMCW chirp signals or other suitable radar signals, and to receive reflected radar signals 5, where the transmitted signals have been reflected by an object 6, such as a target object used for calibration of the vehicle radar system. The transmitted radar signals, in general, may be transmitted with a certain pulse repetition frequency (PRF) corresponding to a pulse repetition interval (PRI). A suitable PRF may be on the order of 200Hz.

The transceiver arrangement 7 comprises a transmitter 8 with a transmit antenna arrangement 14, a receiver 9 with a receiver antenna arrangement 16, an Analog to Digital Converter (ADC) arrangement 10 and a sampling and timing arrangement 11.

As exemplified in Figure 2, the reflected signals 5 may be received by the receiver 9 via the receiver antenna arrangement 16. The received signals 5 are mixed with the transmitted signals 4 in the receiver 9. This may be a single channel mixer, or a two-channel mixer comprising both in-phase and quadrature components. In this way, an IF (Intermediate Frequency) signal or baseband signal 17 is acquired, which may be real or, in the case of a quadrature mixer, imaginary and real, i.e., complex. The signal 17 is filtered in a filter 18 such that a filtered signal 19 is obtained.

The filtered signal 19 is a function of, e.g., bearing and range to the target object 6 and is transferred to the ADC arrangement 10, where the filtered signal 19 is sampled at a certain predetermined sampling frequency fₛ and converted to a discrete time digital signal 20 comprising samples in a previously known manner. The sampling frequency fₛ is provided in the form of a sampling and timing signal 21 produced by the sampling and timing arrangement 11 that is connected to the ADC arrangement 10.

The output of the ADC 10 is input to a signal processing device 12 which is arranged to extract information from the reflected radar signal about, e.g., bearing and range to the target object 6 in a known manner.

As indicated in Figure 1, the vehicle 1 may also comprise a safety signal processing device 42 and safety means 43, for example an emergency braking system and/or an alarm signal device. The safety signal processing device 42 is arranged to control the safety means 43 in dependence of input from the radar system 3. According to an aspect, an output 44 of the signal processing device 12 constitutes input to the safety signal processing device 42. The operation of the safety signal processing device 42 and safety means 43 are improved by proper calibration of the vehicle radar system 3.

To ensure operation of the radar system 3 at the desired accuracy, there are various radar parameters which must be calibrated, i.e., adjusted to compensate for error. Various parts of the radar transceiver arrangement may be calibrated for increased accuracy. Calibration may comprise any of calibrating a phase value, calibrating an amplitude value, calibrating a complex signal value, or calibrating a polar coordinate signal value of the radar transceiver signals. Calibration may also comprise adjusting estimated values or quantities, such as adjusting estimated bearing, adjusting estimated range, or adjusting estimated velocity of a target object to compensate for errors.

In case a target object 6 is located at a known position relative to the radar transmitter, the target object may be used to calibrate one or more parameters of the radar transceiver. The target object then constitutes ground truth with respect to, e.g., angle and/or range. By comparing estimated values of target range and bearing, to corresponding ground truth values, calibration may be performed by determining an error, and adjusting for said error in a known manner.

To calibrate a radar transceiver arrangement, a test set-up, or test rig, is traditionally preferred where the reference or target object is distinctly classifiable as the primary target, and where there is limited interference from, e.g., clutter targets. Normally, such a calibration setup comprises a low-reflection static environment, e.g., an empty room or an anechoic chamber where reflecting objects are static and do not move relative to the radar transceiver antennas.

It is appreciated that the term 'interference' is here to be interpreted broadly to comprise any signal component or signal comprised in the radar signal which has a detrimental effect on performance of a system making use of the received radar signal for calibration purposes. Consequently, interference may comprise any of, e.g., interference from unwanted reflection due to passive objects in the radar transceiver surroundings, external interference from other transmitters and radio frequency sources, internal interference from circuitry of the radar transceiver or other active components located close to the radar receiver, pulsed interference signals which are associated with limited time duration, and near-continuous interference signals which are associated with an extended time duration.

It is furthermore appreciated that the term 'static environment' is here to be interpreted broadly to comprise any environment where relative or absolute movement of target objects relative to a radar transceiver is not significant. Thus, an environment where objects move can still be considered static if the objects do not move significantly in relation to the radar sampling rate or pulse repetition frequency. An environment where objects move can also be considered static as long as the objects do not move significantly in relation to requirements on calibration accuracy of the radar transceiver.

There are drawbacks associated with known anechoic chamber approaches to calibration. For instance, absorber materials used in the anechoic chamber are expensive, the chamber itself is space consuming, and the chamber arrangement is difficult to relocate.

It is also known to modulate the calibration target with a certain Doppler frequency, either electrically or mechanically, for calibration purposes. Such modulating of a target for calibration purposes comprises receiving inbound radar signals, modulating the received radar signals by changing phase and/or amplitude to emulate a Doppler effect, and re-transmitting the modulated radar signals. A modulated target object is more easily resolved in the presence of, e.g., ground clutter due to the Doppler modulation.

There are drawbacks associated also with the Doppler modulator approach, regardless of if an electrical or a mechanical approach is taken. For instance, since range rate and Doppler shifts do not match due to the Doppler modulation, modifications to the signal processing function of the radar calibration routine are necessary. Also, the necessary modulating equipment is difficult and costly to design due to strict requirements on phase and amplitude linearity.

To overcome at least some of the drawbacks associated with the anechoic chamber, the Doppler modulator, and other known approaches to radar transceiver calibration, it is proposed herein to use an active target object as ground truth which modulates radar signals using a first modulation. The radar transceiver to be calibrated then implements a second modulator having a second modulation configured as an inverse to the first modulation and which second modulation is configured with a zero mean value or at least a small mean value.

In a static environment without rapidly moving target objects, received reflected radar signals will be constant or near constant over a given time duration of repetition. Since the second modulation is configured with a zero mean value, any received radar signal in a static environment modulated only by the second modulation will also have a zero mean value over time, or at least have a small average amplitude after integration over time. However, since the first and second modulations are matched to each other in the sense that one inverts the other, any signal having both first and second modulations will not have zero mean and will thus not average out when integrated.

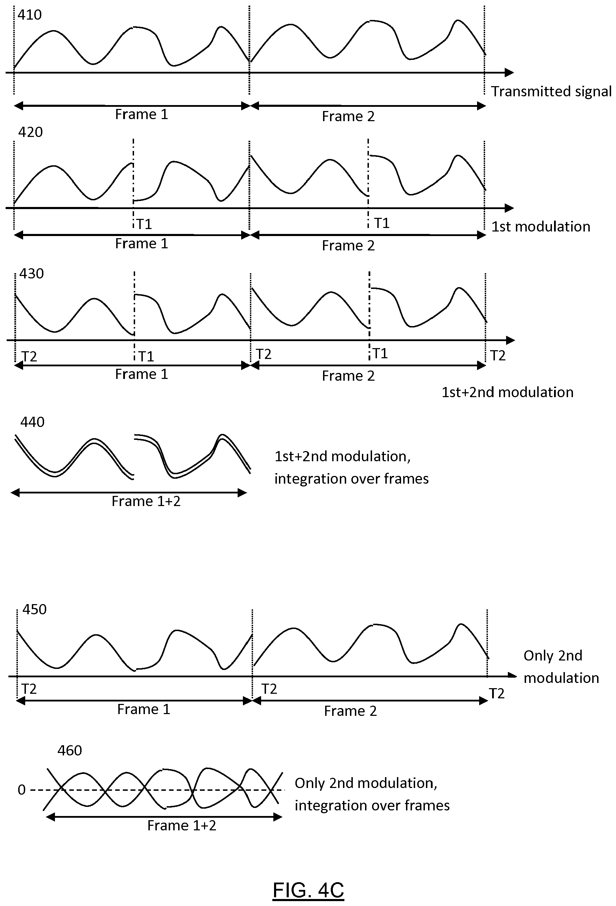

This idea will be exemplified and discussed in more detail in connection to Figure 4C below.

It is appreciated that an integrated signal is a signal which has been accumulated, or summed, over time. Optionally, the signal may also have been accumulated over frequency, or over both time and frequency.

Consequently, when averaging or integrating a received radar signal over time, any reflections originating from the target object applying the first modulation will be coherently integrated and thus accumulated, while any other signal components, e.g., from ground clutter, will average out due to the zero mean value of the second modulation, and therefore be suppressed. In summary, the signals relating to ground truth will be accumulated and thus increase in signal to noise energy ratio, while interference signal energy will be suppressed, thus avoiding the use of an anechoic chamber or Doppler modulating target objects.

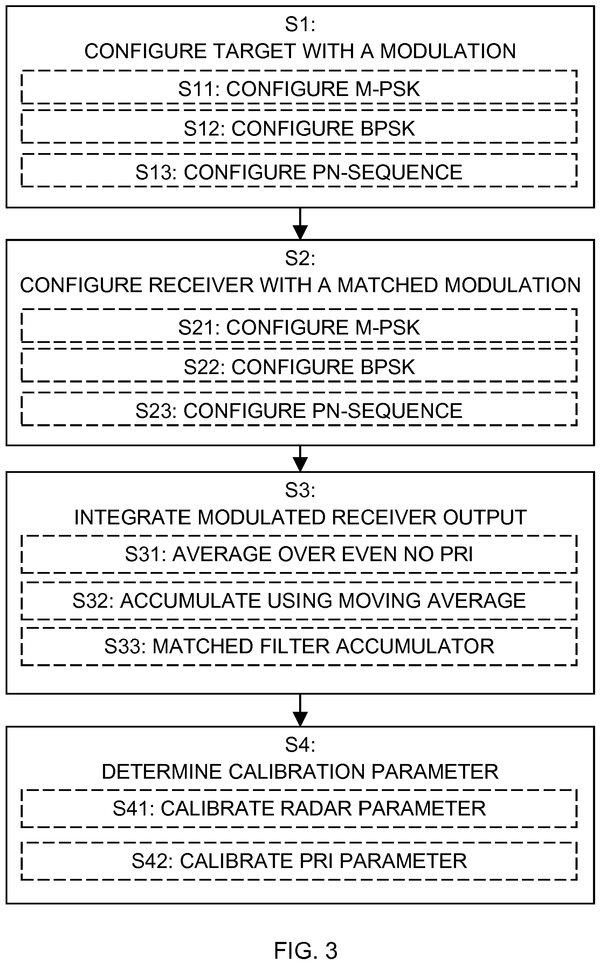

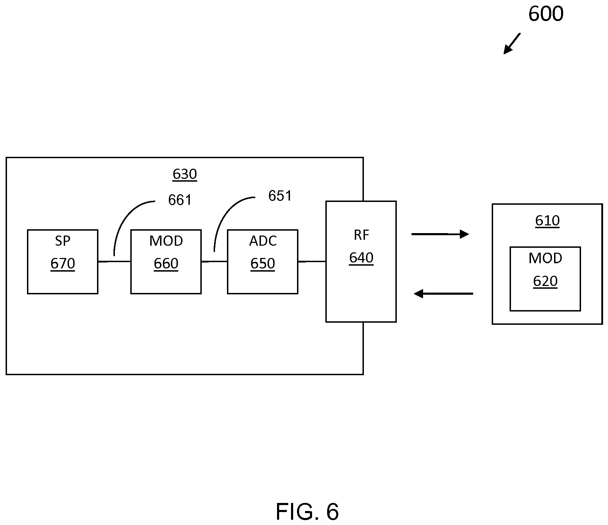

Figure 3 is a flowchart illustrating methods according to the present disclosure. Figure 3 shows a method for calibrating a radar transceiver 630. The method comprises, with reference also to Figure 6, configuring S1 a target object 610 with a modulating transceiver 620 associated with a first modulation. The target is configured to receive inbound radar signals, and to modulate the inbound radar signals by the first modulation, and to re-transmit the modulated radar signals. The target object has a function similar to that of a radar transponder, but is fundamentally different from known Doppler modulating target object suitable for calibration. For instance, it does not apply a Doppler modulation.

The method also comprises configuring S2 the radar transceiver 630 with a modulator 660 associated with a second modulation configured to invert the first modulation. The modulator is arranged to modulate an output 651 of an analog to digital converter, ADC, 650 of the radar transceiver, thereby compensating for the first modulation. The second modulation has a zero mean value, which means that a sum of phasors of the modulation is a phasor with zero amplitude. Thus, a signal, such as a constant signal, modulated only by the second modulation is averaged to zero, or at least suppressed, when integrated over time.

The method also comprises integrating S3 an output signal 661 of the modulator to generate an integrated received radar signal corresponding to a radar detection of the target object. The integrating has an effect of suppressing interference in the received radar signal due to the zero mean property of the second modulation. The second modulation together with the integrating has an effect similar to that of a matched filter, matched to the transmissions of the target object, which amplifies the reflections from the target object while rejecting interference from other sources. Any parts of a received radar signal which originates from the target object and has been modulated by the first modulation will be coherently integrated, since the second modulation has compensated for the first modulation. However, reflected radar signal components originating from other objects in a static environment, i.e., unwanted signal components, have only been modulated by the second modulation. These signal components will be averaged out, or suppressed, due to the zero mean value of the second modulation.

According to a straight forward implementation example of the proposed methods, a static environment is assumed. The first modulation is then configured a sign change within a given PRI for each transmitted pulse (within a time *t_{T}*)*.*

However, according to other example implementations, the method is applied when the calibration object is moving and its corresponding Doppler shift is known with some accuracy. It is appreciated that environments with known parameters, such as known Doppler shifts or known object motion, are equivalent to static scenarios in the sense that the known motion can be compensated for.

The method also comprises determining S4 a calibration parameter of the radar transceiver based on the integrated received radar signal. Thus, calibration of the radar transceiver is enabled without need for anechoic chambers or Doppler modulating target objects.

The proposed methods are advantageously applied to calibrate radar transceivers. Since the second modulator compensates for the first modulation and is arranged in-between the ADC and the signal processing device, no modifications to the signal processing device or ADC are necessary. Advantageously, the environment clutter is reduced or suppressed by the second modulation and the integration. Since interference is suppressed, the methods enable calibration also in scenarios with severe interference.

Advantageously, no absorber material is necessary, since the proposed methods do not require anechoic chambers, instead relying on suppression of interference by means of the first and second modulations.

Also, since no empty room or anechoic chamber is required, the calibration equipment is easily re-located.

The modulator 660 comprised in the radar transceiver is associated with a second modulation configured to invert the first modulation. Herein, 'configured to invert' means that the second modulation is a function of the first modulation and configured to negate effects of the first modulation in the integration stage of the method. Thus, according to some aspects, a constant signal modulated by the first modulation and then by the second modulation no longer has a zero mean value, while a constant signal modulated only by the second modulation has a zero mean value, or a small average value. This way the second modulation compensates for the first modulation, which means that a radar signal which has been modulated by the first modulation and then by the second modulation does not average to zero when integrated. Examples of the first and second modulation will be discussed in more detail below.

According to some aspects, the first and second modulations are M-ary phase shift keying, M-PSK, modulations S11, S21. An M-PSK modulation having zero mean applies phase rotations to the radar signal according to some pre-determined or random sequence which ensures zero mean. A radar signal, such as a complex baseband signal, having been phase rotated in this way, will be averaged to zero when integrated if the phase rotations are performed with a phasor having zero mean value. If the phasor has a non-zero mean value which is small, then the integrated signal will be suppressed to a small value.

According to some such aspects, the first and second modulations are binary phase shift keying, BPSK, modulations S12, S22. A BPSK modulation is a modulation which applies 180-degree phase rotations to the radar signal. According to an example, consider a constant signal s(t)=A^{∗}Sin(2πft), which assumes the constant amplitude A with constant phase of zero degrees. After sampling and BPSK modulation, the modulated sample sequence becomes {+A, -A, +A, -A, +A, -A, ...}, which sequence has zero mean value when integrated over an even number of periods or samples.

On the other hand, suppose the signal was already modulated by a BPSK signal, i.e., a first modulation, then the received signal s(t) would have already been alternating between A and -A at a given rate. After modulation also by the second modulation, the signal sequence would instead again be the constant signal s(t)=A^{∗}Sin(2πft+F), where F is a phase value.

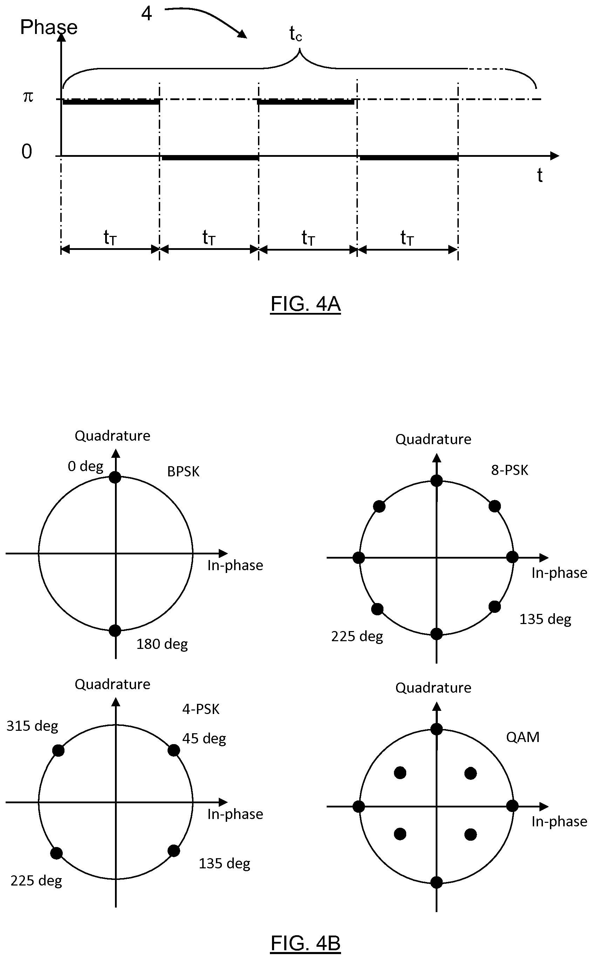

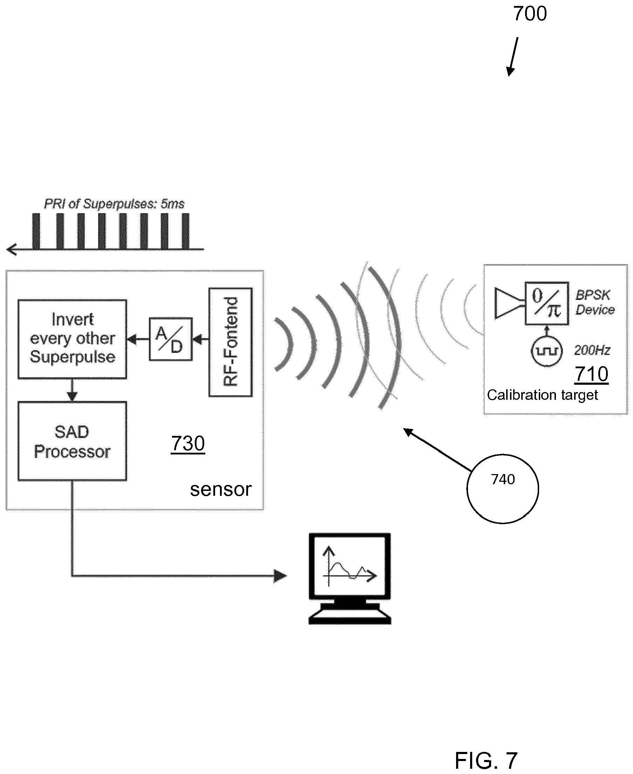

Figure 4A illustrates an example BPSK modulation, where the x-axis shows time and the y-axis shows modulated phase. It is appreciated that phase varies between 180 degrees, or π radians, and zero degrees, or zero radians. It is also appreciated that an averaging of such modulation on a constant signal yields an average value of zero, since zero degrees corresponds to an amplitude of +1 and 180 degrees corresponds to an amplitude value of -1. It is also appreciated that the signal need not necessarily be constant in order for the modulated signal to have zero mean. For instance, the signal may be periodic over a time duration T. Then, if the BPSK modulation is applied with the same periodicity T, successive periods may be averaged in order to suppress a signal modulated by the second modulation. An example of this mechanism will be discussed below in connection to Figure 7.

Figure 4B illustrates four example modulation constellations. The top left constellation is a BPSK constellation, such as that used to modulate the example signal in Figure 4A.

The bottom left constellation is a 4-PSK constellation, i.e., an M-PSK modulation where M=4.

The top right constellation is an 8-PSK constellation, i.e., an M-PSK modulation where M=8.

The bottom right constellation is a QAM constellation with 8 constellation points, i.e., an 8-QAM constellation.

It is appreciated that the modulations illustrated in Figure 4B allow modulation with zero mean. For instance, the mean value of phasors representing the modulations sum up to a phasor having zero amplitude. It is furthermore appreciated that the modulation values can be selected in varying orders while still maintaining the zero mean property. For instance, opposing constellation points may be successively selected, or constellation points may be selected in a clock-wise direction, or in an anti-clock-wise direction.

The first and second modulations may be applied on successive frames of the radar signal, or on successive pulses of the radar signal, or on successive super-pulses of the radar signal.

According to some aspects, a symbol or chip duration t_{T} of the first and second modulations correspond to a pulse repetition interval, PRI, of the radar transceiver.

According to some aspects, the first and second modulations comprise a pseudorandom noise, PN, sequence, modulation S13. Here, the target object applies a first modulation using a first PN sequence. The radar receiver then applies a second modulation with a PN sequence configured to invert the first PN sequence or compensate for the first PN sequence.

The integrating S3 may be performed in a variety of different ways. For instance, according to some aspects, the integrating S3 comprises averaging over an even number of pulse repetition intervals. According to some other aspects, the integrating S3 comprises accumulating using a moving averaging function. According to some further aspects, the integrating S3 comprises filtering by a filter configured to invert the first modulation.

According to some further aspects, the configuring S2 comprises synchronizing the first and second modulations in time. It is appreciated that some modulations in some environments require time synchronization in order for the second modulation to be configured as an inverse of the first modulation. For instance, as an example, if the first modulation is a modulation which applies a phase rotation step every radar frame, then the second modulation can be configured as inverse to the first modulation by applying an opposite phase rotation step at time instants corresponding to the phase rotations of the first modulation. A synchronization of first and second modulation is, according to some aspects, accomplished by way of pilot symbol transmission in a previously known manner. By synchronizing first and second transmissions, the second modulation may be adjusted in time relative to the first modulation to achieve an inverse modulation relative to the first modulation.

It is furthermore appreciated that not all modulations need to be synchronized in time in order for the second modulation to be configured as inverse to the first modulation. As an example, consider Figure 4C. A signal is transmitted using a frame structure, where frames 1 and 2 are shown. Graph 410 illustrates an example transmitted signal. Graph 420 illustrates the transmitted signal after BPSK modulation by a first modulation at time instants T1, i.e., sign switches at periodic intervals. Graph 430 shows the same signal after modulation also by the second modulation at time instants T2. Here, the second modulation also applies sign switches, but at time instants T2. Now, a receiver applying integration over frames will obtain an accumulated signal of increased energy, as illustrated in graph 440 where frames have been superimposed, even though sign switches are not time synchronized.

A signal which only is modulated by the second modulation, and not the first, is illustrated in graph 450. A receiver applying integration over frames will obtain an aggregate signal with small amplitude, as illustrated in graph 460 where frames have been superimposed.

In order to compensate fully for the first modulation by the second modulation, a timing parameter of the second modulation may need to be calibrated to agree with the corresponding timing parameter of the first modulation. Thus, according to some aspects, the determining S4 comprises determining S42 a calibration parameter associated with any of pulse repetition interval, PRI, pulse repetition frequency, PRF, and symbol duration of the first and/or second modulation, tT. According to some examples, the determining of the timing parameter of the second modulation corresponds to a function of synchronizing the first and the second modulations.

As discussed above, the calibrating may be performed on a variety of different parameters of the radar transceiver. For instance, the determining S4 may comprise determining S41 a calibration parameter associated with any of radar bearing, radar range, Doppler frequency, and range rate.

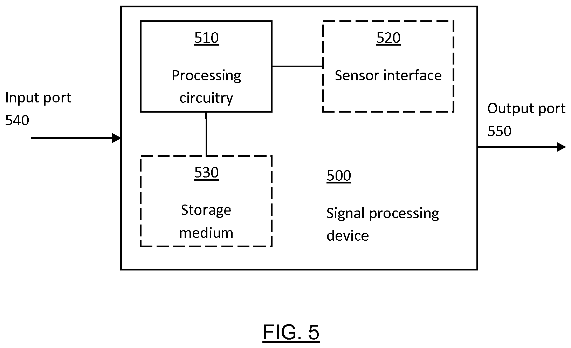

Figure 5 schematically illustrates, in terms of a number of functional units, the components of a signal processing device 500 according to an embodiment. Processing circuitry 510 is provided using any combination of one or more of a suitable central processing unit (CPU), multiprocessor, microcontroller, digital signal processor (DSP), etc., capable of executing software instructions stored in a computer program product, e.g. in the form of a storage medium 530. The processing circuitry 510 may further be provided as at least one application specific integrated circuit (ASIC), or field programmable gate array (FPGA) .

Particularly, the processing circuitry 510 is configured to cause the signal processing device 500 to perform a set of operations, or steps. These operations, or steps, was discussed above in connection to Figure 3. For example, the storage medium 530 may store the set of operations, and the processing circuitry 510 may be configured to retrieve the set of operations from the storage medium 530 to cause the control node 500 to perform the set of operations. The set of operations may be provided as a set of executable instructions. Thus, the processing circuitry 510 is thereby arranged to execute methods as herein disclosed.

The illustrated signal processing device may be applied to perform methods and parts of methods executed in the target object, or in the radar transceiver, such as modulation by the first or second modulation.

The storage medium 530 may also comprise persistent storage, which, for example, can be any single one or combination of magnetic memory, optical memory, solid state memory or even remotely mounted memory.

The signal processing device 500 may further comprise a communications interface 520 for communications with at least one peripheral device, e.g., a sensor interface 520. As such, the sensor interface 520 may comprise one or more transmitters and receivers, comprising analogue and digital components and a suitable number of ports for wired or wireless communication.

The processing circuitry 510 is adapted to control the general operation of the control node 500 e.g. by sending data and control signals to the sensor interface 520 and the storage medium 530, by receiving data and reports from the sensor interface 520, and by retrieving data and instructions from the storage medium 530. Other components, as well as the related functionality, of the control node 500 are omitted in order not to obscure the concepts presented herein.

The signal processing device 500 comprises an input port 540 for obtaining signal samples, and an output port 550 for outputting signal samples. The signal processing device may, according to some aspects, correspond to part 12a of a signal processing device 12 in a vehicle 1, to a modulator 660 in a radar transceiver 630, or to a modulator 620 comprised in a target object 610.

Figure 6 illustrates an example implementation of a radar calibration system 600 comprising a radar transceiver 630 and a target object 610 as discussed above.

There is shown a target object 610 arranged for calibrating a corresponding radar transceiver 630. The target object comprises a modulating transceiver 620 associated with a first modulation. The modulating transceiver is arranged to receive radar signals, and to modulate the received radar signals by the first modulation, and to re-transmit the modulated radar signals. The first modulation corresponds to a second modulation of the radar transceiver, which second modulation is configured to invert the first modulation and to have a zero mean value.

There is also shown a radar transceiver 630 configured for calibration. The radar transceiver comprises a radar front end, RF, 640 arranged to transmit radar signals and to receive reflected radar signals, an analog to digital converter, ADC, 650 arranged to convert analog received radar signals into digital received radar signals, a modulator, MOD, 660 associated with a second modulation having a zero mean value and configured to invert a first modulation applied by a target object. The modulator is arranged to modulate an output 651 of the ADC 650 of the radar transceiver, thereby compensating for the first modulation, and to input the modulated ADC output 661 to a signal processing device, SP, 670 comprised in the radar transceiver 630. The signal processing device 670 is arranged to integrate the modulated ADC output 661 to generate an integrated received radar signal corresponding to a radar detection of the target object, and to determine a calibration parameter of the radar transceiver based on the integrated received radar signal.

By the same principles as discussed above, the second modulation compensates for, or inverts, the first modulation such that radar reflections originating from the target object are coherently integrated in the signal processing function. Reflections originating from sources other than the target object, i.e., interference, have not been modulated by the first modulation. For such reflections, the second modulation causes the reflections to be averaged out during integration due to the zero mean property of the second modulation. This way reflections originating from the target object 610 are accumulated by the integrating function while other reflections are suppressed or removed from the received radar signal by the same integrating function.

According to some aspects, the modulator 660 associated with the second modulation is arranged as a module separate from the ADC 650 and/or separate from the signal processing device 670. Thereby the above-mentioned advantages are obtained without need to replace the ADC, nor the signal processing device.

The illustrated radar transceiver 630 is suitable for installation in a vehicle, such as the vehicle 1 illustrated in Figure 1.

Figure 7 illustrates an example radar calibration system 700 arranged to operate according to the above discussed principles. A target object 710 is arranged to modulate inbound radar signals and to re-transmit the modulated radar signals. According to the example of Figure 7, the modulation is a BPSK modulation at a rate of 200Hz, which corresponds to a pulse repetition interval, PRI, of 5 milliseconds implemented by the radar transceiver to be calibrated. Thus, here the first modulation is a BPSK modulation arranged to apply binary phase shifts of 0 and 180 degrees at a repetition frequency of 200 Hz. The repetition pattern is periodic, +1, -1, +1, -1, etc. However, other patterns may also be used, e.g., a pattern determined based on a PN sequence with zero mean.

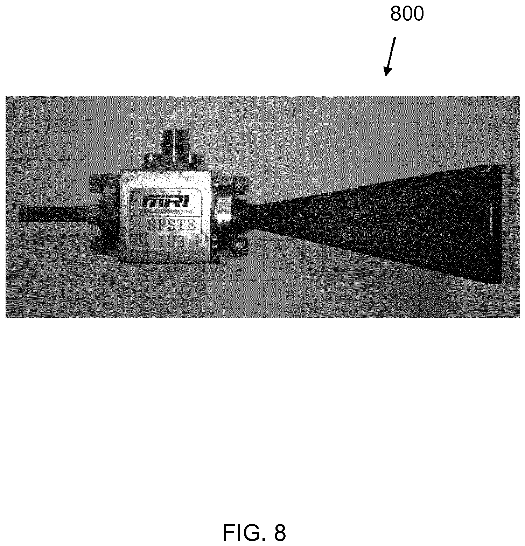

An example implementation of the calibration target 710, i.e., the target object, is shown in Figure 8 which illustrates an example target object 800. The target object implements the modulator configured to apply the first modulation.

The radar signals reflected, or retransmitted, by the target object are received by radar transceiver 730. The example radar transceiver comprises an RF front end connected to an analog to digital converter, here shown as A/D. The second modulation configured to invert the first modulation is here a modulation which comprises inverting every other super-pulse at a repetition frequency of 200 Hz, i.e., the same repetition frequency as that applied in the first modulation. In essence, the second modulation is also a BPSK modulation, but applied to the output of the ADC. It is appreciated that the second modulation has a zero mean value, when integrated over an even number of super-pulses.

Radar signals reflected by the calibration target, i.e., the target object, are integrated by a signal processing unit, shown in Figure 7 as SAD processor. Radar signal reflections originating from some other source 740 will not have been modulated by the first modulation. These signal components will only be modulated by the second modulation, in this example by the inverting of super-pulses. Thereby, when averaging super-pulses, reflections other that those originating from the target object are suppressed, while reflections originating from the target object are not suppressed. Thus, facilitating a successful calibration procedure even in severe interference conditions.

The present disclosure is not limited to the examples above, but may vary freely within the scope of the appended claims. For example, the radar system may be implemented in any type of vehicle such as cars, trucks, buses, boats and aircraft as well as fixed radars such as those monitoring traffic flow, marine environments, aircraft landing or presence of pedestrians.

In summary, there has been disclosed herein a method for calibrating a radar transceiver 630 in a near-static environment. The method comprises configuring S1 a target object 610 with a modulating transceiver 620 associated with a first modulation, configuring S2 the radar transceiver 630 with a modulator 660 associated with a second modulation configured to invert the first modulation and to have a zero mean value, integrating S3 an output signal 661 of the modulator to generate an integrated received radar signal corresponding to a radar detection of the target object, and determining S4 a calibration parameter of the radar transceiver based on the integrated received radar signal.

According to aspects, the first and second modulations are M-ary phase shift keying, M-PSK, modulations S11, S21, or M-ary quadrature amplitude modulations, M-QAM.

According to aspects, the first and second modulations are binary phase shift keying, BPSK, modulations S12, S22.

According to aspects, the first and second modulations comprise a pseudorandom noise, PN, sequence, modulation S13.

According to aspects, a symbol duration of the first and second modulations correspond to a pulse repetition interval, PRI, of the radar transceiver.

According to aspects, the integrating S3 comprises averaging over an even number of pulse repetition intervals.

According to aspects, the integrating S3 comprises accumulating using a moving averaging function.

According to aspects, the integrating S3 comprises filtering by a filter configured to invert the first modulation.

According to aspects, the determining S4 comprises determining S41 a calibration parameter associated with any of radar bearing, radar range, Doppler frequency, and range rate.

According to aspects, the determining S4 comprises determining S42 a calibration parameter associated with any of pulse repetition interval, PRI, pulse repetition frequency, PRF, and symbol duration of the first and/or second modulation, tT.

There was also disclosed herein a target object 610 for calibrating a radar transceiver 630, comprising a modulating transceiver 620 associated with a first modulation, the modulating transceiver being arranged to receive radar signals, and to modulate the received radar signals by the first modulation, and to re-transmit the modulated radar signals, the first modulation corresponding to an inverse of a second modulation of the radar transceiver.

There was furthermore disclosed herein a radar transceiver 630 configured for calibration in a near-static environment, comprising a radar front end 640 arranged to transmit radar signals and to receive reflected radar signals, an analog to digital converter, ADC, 650 arranged to convert analog received radar signals into digital received radar signals, a modulator 660 associated with a second modulation configured to invert a first modulation and having a zero mean value, wherein the modulator is arranged to modulate an output 651 of the ADC 650 of the radar transceiver, thereby compensating for the first modulation, and to input the modulated ADC output 661 to a signal processing device 670 comprised in the radar transceiver 630, the signal processing device 670 being arranged to integrate the modulated ADC output 661 to generate an integrated received radar signal corresponding to a radar detection of the target object, and to determine a calibration parameter of the radar transceiver based on the integrated received radar signal.

According to aspects, the modulator 660 associated with the second modulation is arranged as a module separate from the ADC 650 and/or separate from the signal processing device 670.

The disclosed techniques are applicable in a vehicle 1 comprising a radar transceiver.

## Claims

1. A method for calibrating a radar transceiver (630), the method comprising;
configuring (S1) a target object (610) with a modulating transceiver (620) associated with a first modulation,
configuring (S2) the radar transceiver (630) with a modulator (660) associated with a second modulation configured to invert the first modulation and to have a zero mean value,
integrating (S3) an output signal (661) of the modulator to generate an integrated received radar signal corresponding to a radar detection of the target object, and
determining (S4) a calibration parameter of the radar transceiver based on the integrated received radar signal.

2. The method according to claim 1, wherein the first and second modulations are M-ary phase shift keying, M-PSK, modulations (S11, S21), or M-ary quadrature amplitude modulations, M-QAM.

3. The method according to claim 1 or 2, wherein the first and second modulations are binary phase shift keying, BPSK, modulations (S12, S22).

4. The method according to any previous claim, wherein the first and second modulations comprise a pseudorandom noise, PN, sequence, modulation (S13).

5. The method according to any previous claim, wherein a symbol duration of the first and second modulations correspond to a pulse repetition interval, PRI, of the radar transceiver.

6. The method according to any previous claim, wherein the integrating (S3) comprises averaging over an even number of pulse repetition intervals.

7. The method according to any of claim 1-5, wherein the integrating (S3) comprises accumulating using a moving averaging function.

8. The method according to any of claim 1-5, wherein the integrating (S3) comprises filtering by a filter configured to invert the first modulation.

9. The method according to any previous claim, wherein the determining (S4) comprises determining (S41) a calibration parameter associated with any of radar bearing, radar range, Doppler frequency, and range rate.

10. The method according to any previous claim, wherein the determining (S4) comprises determining (S42) a calibration parameter associated with any of pulse repetition interval, PRI, pulse repetition frequency, PRF, and symbol duration of the first and/or second modulation, tT.

11. A radar transceiver (630) configured for calibration, comprising a radar front end (640) arranged to transmit radar signals and to receive reflected radar signals, an analog to digital converter, ADC, (650) arranged to convert analog received radar signals into digital received radar signals, a modulator (660) associated with a second modulation configured to invert a first modulation and having a zero mean value, wherein the modulator is arranged to modulate an output (651) of the ADC (650) of the radar transceiver, thereby compensating for the first modulation, and to input the modulated ADC output (661) to a signal processing device (670) comprised in the radar transceiver (630), the signal processing device (670) being arranged to integrate the modulated ADC output (661) to generate an integrated received radar signal corresponding to a radar detection of a target object, and to determine a calibration parameter of the radar transceiver based on the integrated received radar signal.

12. The radar transceiver (630) according to claim 11, wherein the modulator (660) associated with the second modulation is arranged as a module separate from the ADC (650) and/or separate from the signal processing device (670).

13. A vehicle (1) comprising a radar transceiver according to claim 11 or 12.

14. A radar calibration system (600) comprising a radar transceiver according to claim 11 or 12 and one or more target objects (610) for calibrating a radar transceiver (630) in a near-static environment, comprising a modulating transceiver (620) associated with a first modulation, the modulating transceiver being arranged to receive radar signals, and to modulate the received radar signals by the first modulation, and to re-transmit the modulated radar signals, the first modulation corresponding to an inverse of a second modulation of the radar transceiver.

## Patentansprüche

1. Verfahren zum Kalibrieren eines Radar-Sendeempfängers (630), wobei das Verfahren umfasst:
Konfigurieren (S1) eines Zielobjekts (610) mit einem modulierenden Sendeempfänger (620), der einer ersten Modulation zugeordnet ist,
Konfigurieren (S2) des Radar-Sendeempfängers (630) mit einem Modulator (660), der einer zweiten Modulation zugeordnet ist, die so konfiguriert ist, dass sie die erste Modulation umkehrt und einen Mittelwert von Null aufweist,
Integrieren (S3) eines Ausgabesignals (661) des Modulators, um ein integriertes empfangenes Radarsignal zu erzeugen, das einer Radarerfassung des Zielobjekts entspricht, und
Bestimmen (S4) eines Kalibrierungsparameters des Radar-Sendeempfängers, basierend auf dem integrierten empfangenen Radarsignal.

2. Verfahren nach Anspruch 1, wobei die erste und die zweite Modulation M-äre Phasenumtastungs-, M-PSK-, Modulationen (S11, S21) oder M-äre Quadraturamplitudenmodulationen, M-QAM, sind.

3. Verfahren nach Anspruch 1 oder 2, wobei die erste und die zweite Modulation binäre Phasenumtastungs-, BPSK-, Modulationen (S12, S22) sind.

4. Verfahren nach einem der vorstehenden Ansprüche, wobei die erste und die zweite Modulation eine Pseudozufallsrausch-, PN-, Sequenzmodulation (S13) umfassen.

5. Verfahren nach einem der vorstehenden Ansprüche, wobei eine Symboldauer der ersten und der zweiten Modulation einem Impulswiederholungsintervall, PRI, des Radar-Sendeempfängers entspricht.

6. Verfahren nach einem der vorstehenden Ansprüche, wobei das Integrieren (S3) ein Mitteln über eine gerade Anzahl von Impulswiederholungsintervallen umfasst.

7. Verfahren nach einem der Ansprüche 1 bis 5, wobei das Integrieren (S3) ein Akkumulieren unter Anwendung einer gleitenden Mittelungsfunktion umfasst.

8. Verfahren nach einem der Ansprüche 1 bis 5, wobei das Integrieren (S3) ein Filtern durch einen Filter umfasst, der dafür konfiguriert ist, die erste Modulation umzukehren.

9. Verfahren nach einem der vorstehenden Ansprüche, wobei das Bestimmen (S4) ein Bestimmen (S41) eines Kalibrierungsparameters umfasst, der einem von Radarpeilung, Radarentfernung, Dopplerfrequenz und Entfernungsänderung zugeordnet ist.

10. Verfahren nach einem der vorstehenden Ansprüche, wobei das Bestimmen (S4) ein Bestimmen (S42) eines Kalibrierungsparameters umfasst, der einem von Impulswiederholungsintervall, PRI, Impulswiederholungsfrequenz, PRF, und Symboldauer der ersten und/oder der zweiten Modulation, tT, zugeordnet ist.

11. Radar-Sendeempfänger (630), der zum Kalibrieren konfiguriert ist, umfassend ein Radar-Frontend (640), das so eingerichtet ist, dass es Radarsignale sendet und reflektierte Radarsignale empfängt, einen Analog-Digital-Wandler, ADC, (650), der so eingerichtet ist, dass er analoge empfangene Radarsignale in digitale empfangene Radarsignale umwandelt, einen Modulator (660), der einer zweiten Modulation zugeordnet ist, die so konfiguriert ist, dass sie eine erste Modulation umkehrt, und einen Mittelwert Null aufweist, wobei der Modulator so eingerichtet ist, dass er eine Ausgabe (651) des ADC (650) des Radar-Sendeempfängers moduliert, wodurch die erste Modulation kompensiert wird, und die modulierte ADC-Ausgabe (661) in eine Signalverarbeitungsvorrichtung (670) eingibt, die in dem Radar-Sendeempfänger (630) umfasst ist, wobei die Signalverarbeitungsvorrichtung (670) so eingerichtet ist, dass sie die modulierte ADC-Ausgabe (661) integriert, um ein integriertes empfangenes Radarsignal zu erzeugen, welches einer Radarerfassung eines Zielobjekts entspricht, und um, basierend auf dem integrierten empfangenen Radarsignal, einen Kalibrierungsparameter des Radar-Sendeempfängers zu bestimmen.

12. Radar-Sendeempfänger (630) nach Anspruch 11,
wobei der Modulator (660), der zu der zweiten Modulation gehört, als ein von dem ADC (650) und/oder von der Signalverarbeitungseinrichtung (670) separates Modul eingerichtet ist.

13. Fahrzeug (1), umfassend einen Radar-Sendeempfänger nach Anspruch 11 oder 12.

14. Radarkalibrierungssystem (600), umfassend einen Radar-Sendeempfänger nach Anspruch 11 oder 12 und eines oder mehrere Zielobjekte (610) zum Kalibrieren eines Radar-Sendeempfängers (630) in einer beinahe statischen Umgebung, umfassend einen modulierenden Sendeempfänger (620), der einer ersten Modulation zugeordnet ist, wobei der modulierende Sendeempfänger so eingerichtet ist, dass er Radarsignale empfängt und die empfangenen Radarsignale durch die erste Modulation moduliert und die modulierten Radarsignale erneut sendet, wobei die erste Modulation einer Umkehrung einer zweiten Modulation des Radar-Sendeempfängers entspricht.

## Revendications

1. Procédé d'étalonnage d'un émetteur-récepteur radar (630), le procédé comprenant ;
la configuration (S1) d'un objet cible (610) avec un émetteur-récepteur modulant (620) associé à une première modulation,
la configuration (S2) de l'émetteur-récepteur radar (630) avec un modulateur (660) associé à une deuxième modulation configurée pour inverser la première modulation et pour avoir une valeur moyenne de zéro,
l'intégration (S3) d'un signal de sortie (661) du modulateur pour générer un signal radar reçu intégré correspondant à une détection radar de l'objet cible, et
la détermination (S4) d'un paramètre d'étalonnage de l'émetteur-récepteur radar sur la base du signal radar reçu intégré.

2. Procédé selon la revendication 1, dans lequel les première et deuxième modulations sont des modulations par déplacement de phase M-aires, M-PSK (S11, S21), ou des modulations d'amplitude par quadrature M-aires, M-QAM.

3. Procédé selon la revendication 1 ou 2, dans lequel les première et deuxième modulations sont des modulations par déplacement de phase binaires, BPSK (S12, S22).

4. Procédé selon l'une quelconque revendication précédente, dans lequel les première et deuxième modulations comprennent une modulation de séquence de bruit pseudoaléatoire, PN (S13).

5. Procédé selon l'une quelconque revendication précédente, dans lequel une durée de symbole des première et deuxième modulations correspond à un intervalle de répétition d'impulsion, PRI, de l'émetteur-récepteur radar.

6. Procédé selon l'une quelconque revendication précédente, dans lequel l'intégration (S3) comprend le moyennage sur un nombre pair d'intervalles de répétition d'impulsion.

7. Procédé selon l'une quelconque des revendications 1 à 5, dans lequel l'intégration (S3) comprend un cumul en utilisant une fonction de moyenne mobile.

8. Procédé selon l'une quelconque des revendications 1 à 5, dans lequel l'intégration (S3) comprend le filtrage par un filtre configuré pour inverser la première modulation.

9. Procédé selon l'une quelconque revendication précédente, dans lequel la détermination (S4) comprend la détermination (S41) d'un paramètre d'étalonnage associé à l'un quelconque parmi un relèvement de radar, une portée de radar, une fréquence Doppler, et un taux de variation de distance.

10. Procédé selon l'une quelconque revendication précédente, dans lequel la détermination (S4) comprend la détermination (S42) d'un paramètre d'étalonnage associé à l'un quelconque parmi un intervalle de répétition d'impulsion, PRI, une fréquence de répétition d'impulsion, PRF, et une durée de symbole de la première et/ou deuxième modulation, tT.

11. Émetteur-récepteur radar (630) configuré pour un étalonnage, comprenant un module frontal radar (640) agencé pour transmettre des signaux radar et pour recevoir des signaux radar réfléchis, un convertisseur analogique vers numérique, ADC (650) agencé pour convertir des signaux radar reçus analogiques en signaux radar reçus numériques, un modulateur (660) associé à une deuxième modulation configuré pour inverser une première modulation et ayant une valeur moyenne de zéro, dans lequel le modulateur est agencé pour moduler une sortie (651) de l'ADC (650) de l'émetteur-récepteur radar, ce qui compense la première modulation, et pour introduire la sortie d'ADC modulée (661) dans un dispositif de traitement de signal (670) compris dans l'émetteur-récepteur radar (630), le dispositif de traitement de signal (670) étant agencé pour intégrer la sortie d'ADC modulée (661) pour générer un signal radar reçu intégré correspondant à une détection radar d'un objet cible, et pour déterminer un paramètre d'étalonnage de l'émetteur-récepteur radar sur la base du signal radar reçu intégré.

12. Émetteur-récepteur radar (630) selon la revendication 11,
dans lequel le modulateur (660) associé à la deuxième modulation est agencé en tant que module distinct de l'ADC (650) et/ou distinct du dispositif de traitement de signal (670).

13. Véhicule (1) comprenant un émetteur-récepteur radar selon la revendication 11 ou 12.

14. Système d'étalonnage radar (600) comprenant un émetteur-récepteur radar selon la revendication 11 ou 12 et un ou plusieurs objets cibles (610) pour l'étalonnage d'un émetteur-récepteur radar (630) dans un environnement à peu près statique, comprenant un émetteur-récepteur modulant (620) associé à une première modulation, l'émetteur-récepteur modulant étant agencé pour recevoir des signaux radar, et pour moduler les signaux radar reçus par la première modulation, et pour retransmettre les signaux radar modulés, la première modulation correspondant à un inverse d'une deuxième modulation de l'émetteur-récepteur radar.
